# EUROPÄISCHE PATENTSCHRIFT

(11) **EP 3 665 219 B1**
(45) Veröffentlichungstag und Bekanntmachung des Hinweises auf die Patenterteilung: **12.02.2025**
(21) Anmeldenummer: 18752740.3
(22) Anmeldetag: 08.08.2018
(51) Int. Cl.: C08K 3/32, C08K 5/3492, C08K 5/5313, C08K 5/5317, C08K 7/14, C08L 77/06, C08L 67/02, C08L 77/02, C08K 5/134, C08K 5/526, C08K 5/5393, C08K 5/098, C08K 5/101

(54) **FLAMMHEMMENDE POLYAMIDZUSAMMENSETZUNGEN UND DEREN VERWENDUNG**
FLAME-RETARDANT POLYAMIDE COMPOSITIONS AND USE THEREOF
COMPOSITIONS IGNIFUGES DE POLYAMIDE ET LEUR UTILISATION

(30) Priorität: 11.08.2017 DE 102017214046
(43) Veröffentlichungstag der Anmeldung: 17.06.2020
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Clariant Produkte (Deutschland) GmbH
(86) Internationale Anmeldenummer: PCT/EP2018/071444
(87) Internationale Veröffentlichungsnummer: WO 2019/030251

(56) Entgegenhaltungen:
- EP-A1- 1 544 206
- EP-A1- 1 544 206
- WO-A1-2012/045414
- WO-A1-2012/045414
- WO-A1-2018/015253
- DE-A1- 102014 001 222
- DE-A1- 102014 001 222

## Beschreibung

Die vorliegende Erfindung betrifft flammhemmende Polyamidzusammensetzungen sowie daraus hergestellte Formteile.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittelsysteme eingesetzt, die nur geringe oder keine Rauchgase bilden

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 (entsprechend EP 1,544,206 A1) ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

WO 2012/045414 A1 beschreibt Flammschutzmittel-Stabilisator-Kombinationen für thermoplastische Polymere. Diese Kombinationen enthalten eine Mischung aus einem Salz einer Dialkylphosphinsäure mit einem Salz der Phosphonsäure sowie gegebenenfalls weitere Stickstoff- oder Phosphor-Stickstoff-haltige Flammschutzmittel

Aus der DE 10 2014 001 222 A1 sind halogenfreie Flammschutzmittelmischungen mit gleichmäßiger Rieselfähigkeit bekannt, Diese enthalten Salze der Dialkylphosphinsäure, nicht brennbare Zusätze und Aluminiumphosphit.

Die prioritätsältere WO 2018/015253 A1 beschreibt Flammschutzmittelmischungen, die Diorganylphosphinsäuresalze und Eisen enthalten.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungsreaktionen, zu Ausgasungen oder Verfärbungen kommen.

Aus der WO 2014/135256 A1 sind Polyamid-Formmassen bekannt, die eine deutlich verbesserte thermische Stabilität, eine verringerte Migrationsneigung sowie ein gute elektrische und mechanische Eigenschaften aufweisen.

Bislang fehlt es jedoch an flammgeschützten phosphinathaltigen Polyamidzusammensetzungen die alle geforderten Eigenschaften gleichzeitig erreichen, wie gute elektrische Werte sowie einen effektiven Flammschutz, sowie gleichzeitig eine gute Entformbarkeit und eine glatte Oberfläche des Formteils.

Es war daher Aufgabe der vorliegenden Erfindung, flammgeschützte Polyamidzusammensetzungen auf Basis phosphinathaltiger Flammschutzsysteme zur Verfügung zu stellen, die alle vorgenannten Eigenschaften gleichzeitig aufweisen und die insbesondere gute elektrische Werte (GWFI, CTI) sowie einen effektiven Flammschutz gekennzeichnet durch möglichst kurze Nachbrennzeiten (UL-94, Brandklasse), sowie gleichzeitig eine gute Entformbarkeit und eine glatte Oberfläche des Formteils (Oberfläche) aufweisen.

Gegenstand der Erfindung sind flammhemmende Polyamidzusammensetzungen, enthaltend
- 25 bis 95 Gew.-% thermoplastisches Polyamid mit einem Schmelzpunkt von kleiner gleich 290 °C, vorzugsweise von kleiner gleich 280 °C und ganz besonders bevorzugt von kleiner gleich 250 °C, bestimmt mittels Differential-Scanning-Kalorimetrie (DSC) bei einer Aufheizrate von 10 K/Sekunde, als Komponente A,
- 1 bis 45 Gew.-% Füllstoffe und/oder Verstärkungsstoffe, vorzugsweise Glasfasern, als Komponente B,
- 1 bis 35 Gew.-% Phosphinsäuresalz der Formel (I) als Komponente C 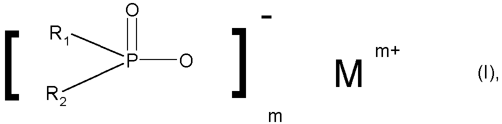
   worin R₁ und R₂ Ethyl bedeuten,
   M Al, Fe, TiOₚ oder Zn ist,
   m 2 bis 3, vorzugsweise 2 oder 3, bedeutet, und
   p = (4 - m) / 2 ist
- 0,01 bis 3 Gew.-% Verbindung ausgewählt aus der Gruppe der Al-, Fe-, TiOₚ-oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel (II) als Komponente E 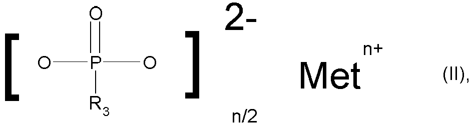
   worin R₃ Ethyl bedeutet,
   Met Al, TiO_{q} oder Zn ist,
   n 2 bis 3, vorzugsweise 2 oder 3, bedeutet, und
   q = (4 - n) / 2 ist
- 1 bis 25 Gew.-% Melaminpolyphosphat mit einem mittleren Kondensationsgrad von 20 bis 200 - als Komponente F,
- 0,05 bis 5 Gew.-% Wachs ausgewählt aus der Gruppe der Polyolefinwachse, Amidwachse, natürlichen Wachse, langkettigen aliphatischen Carbonsäuren die Kettenlängen von C₁₄ bis C₄₀ aufweisen und/oder deren Estern oder Salzen als Komponente G, wobei die Prozentangaben sich auf die Gesamtmenge der Polyamidzusammensetzung beziehen.

In der erfindungsgemäßen Polyamidzusammensetzung beträgt der Anteil an Komponente A 25 bis 95 Gew.-%, vorzugsweise 25 bis 75 Gew.-%.

In der erfindungsgemäßen Polyamidzusammensetzung beträgt der Anteil an Komponente B 1 bis 45 Gew.-%, vorzugsweise 20 bis 40 Gew.-%.

In der erfindungsgemäßen Polyamidzusammensetzung beträgt der Anteil an Komponente C 1 bis 35 Gew.-%, vorzugsweise 5 bis 20 Gew.-%.

In der erfindungsgemäßen Polyamidzusammensetzung beträgt der Anteil an Komponente D 0,01 bis 3 Gew.-%, vorzugsweise 0,05 bis 1,5 Gew.-%.

In der erfindungsgemäßen Polyamidzusammensetzung beträgt der Anteil an Komponente E 0,001 bis 1 Gew.-%, vorzugsweise 0,01 bis 0,6 Gew.-%.

In der erfindungsgemäßen Polyamidzusammensetzung beträgt der Anteil an Komponente F 1 bis 25 Gew.-%, vorzugsweise 2 bis 10 Gew.-%.

In der erfindungsgemäßen Polyamidzusammensetzung beträgt der Anteil an Komponente G 0,05 bis 5 Gew.-%, vorzugsweise 0,1 bis 2 Gew.-%.

Dabei beziehen sich die Prozentangaben für die Anteile der Komponenten A bis G auf die Gesamtmenge der Polyamidzusammensetzung.

Bei den erfindungsgemäßen flammhemmenden Polyamidzusammensetzungen beträgt
- der Anteil von Komponente A 25 bis 95 Gew.-%,
- der Anteil von Komponente B 1 bis 45 Gew.-%,
- der Anteil von Komponente C 1 bis 35 Gew.-%,
- der Anteil von Komponente D 0,01 bis 3 Gew.-%,
- der Anteil von Komponente E 0,001 bis 1 Gew.-%,
- der Anteil von Komponente F 1 bis 25 Gew.-%, und
- der Anteil von Komponente G 0,05 bis 5 Gew.-%,
wobei die Prozentangaben sich auf die Gesamtmenge der Polyamidzusammensetzung beziehen.

Besonders bevorzugt werden flammhemmende Polyamidzusammensetzungen bei denen
- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%,
- der Anteil von Komponente E 0,01 bis 0,6 Gew.-%,
- der Anteil von Komponente F 2 bis 10 Gew.-%, und
- der Anteil von Komponente G 0,1 bis 2 Gew.-%
beträgt.

Bevorzugt eingesetzte Salze der Komponente C sind solche, worin M^{m+} Zn²⁺, Fe³⁺ oder insbesondere Al³⁺ bedeuten.

Bevorzugt eingesetzte Salze der Komponente D sind Zink-, Eisen- oder insbesondere Aluminiumsalze.

Bevorzugt eingesetzte Salze der Komponente E sind solche, worin Metⁿ⁺ Zn²⁺ oder insbesondere Al³⁺ bedeuten.

Ganz besonders bevorzugt werden flammhemmende Polyamidzusammensetzungen, in denen M und Met Al bedeuten, m und n 3 sind und in denen die Verbindungen der Komponente D als Aluminiumsalze vorliegen.

In einer bevorzugten Ausführungsform enthalten die oben beschriebenen flammhemmenden Polyamidzusammensetzungen anorganisches Phosphonat als weitere Komponente H.

Die Verwendung der erfindungsgemäß als Komponente H eingesetzten anorganischen Phosphonate oder auch Salze der phosphorigen Säure (Phosphite) sind als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente H) den allgemeinen Formeln (IV) oder (V)

[(HO)PO₂]²⁻_{p/2} Kat^{p+} (IV)

[(HO)₂PO]⁻ₚ Kat^{p+} (V)

worin Kat ein p-wertiges Kation, insbesondere ein Kation eines Alkalimetalls, Erdalkalimetalls, ein Ammoniumkation und/oder ein Kation von Fe, Zn oder insbesondere von Al einschließlich der Kationen Al(OH) oder Al(OH)₂ ist, und p 1, 2, 3 oder 4 bedeutet.

Bevorzugt handelt es sich bei dem anorganischen Phosphonat (Komponente H) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1.5}*12H₂O, Al₂(HPO₃)³*xAl₂O₃*nH₂O mit x = 2,27 - 1 und/oder Al₄H₆P₁₆O₁₈.

Bei dem anorganischen Phosphonat (Komponente H) handelt es sich bevorzugt auch um Aluminiumphosphite der Formeln (VI), (VII) und/oder (VIII)

Al₂(HPO₃)₃ × (H₂O)_{q} (VI)

wobei q 0 bis 4 bedeutet,

Al_{2,00}M_{z}(HPO₃)_{y}(OH)ᵥ × (H₂O)_{w} (VII)

wobei M Alkalimetallkationen, z 0,01 bis 1,5 und y 2,63 bis 3,5 und v 0 bis 2 und w 0 bis 4 bedeutet;

Al_{2,00}(HPO₃)ᵤ(H₂PO₃)ₜ × (H₂O)ₛ (VIII),

wobei u 2 bis 2,99 und 12 bis 0,01 und s 0 bis 4 bedeutet,
   und/oder
um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1 und/oder Al₄H₆P₁₆O₁₈.

Bevorzugte anorganische Phosphonate (Komponente H) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente H um ein Umsetzungsprodukt aus phosphoriger Säure und einer Aluminiumverbindung.

Besonders bevorzugte Komponenten H sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit
Bevorzugtes Dinatriumphosphithydrat ist Brüggolen^{®} H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen flammhemmenden Polyamidzusammensetzungen als Komponente H eine Verbindung der Formel (III) 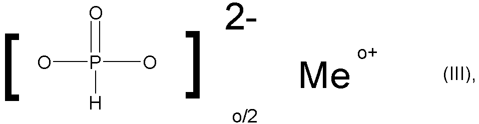
worin Me Fe, TiOᵣ, Zn oder insbesondere Al ist,
o 2 bis 3, vorzugsweise 2 oder 3, bedeutet, und
r = (4 - o) / 2 ist.

Bevorzugt eingesetzte Verbindungen der Formel III sind solche, worin Me^{o+} Zn²⁺, Fe³⁺ oder insbesondere Al³⁺ bedeuten.

Komponente H liegt vorzugsweise in einer Menge von 0,005 bis 10 Gew.-%, insbesondere in einer Menge von 0,02 bis 5 Gew.-%, bezogen auf die Gesamtmenge der Polyamidzusammensetzung, vor.

Bevorzugt sind erfindungsgemäße flammhemmende Polyamidzusammensetzungen, die einen Comparative Tracking Index, gemessen nach dem International

Electrotechnical Commission Standard IEC-60112/3, von größer gleich 500 Volt aufweisen.

Ebenfalls bevorzugte erfindungsgemäße flammhemmende Polyamidzusammensetzungen erreichen eine Bewertung von V0 nach UL-94, insbesondere gemessen an Formteilen von 3,2 mm bis 0,4 mm Dicke.

Weitere bevorzugte erfindungsgemäße flammhemmende Polyamidzusammensetzungen weisen einen Glow Wire Flammability Index nach IEC-60695-2-12 von mindestens 960 °C auf, insbesondere gemessen an Formteilen von 0,75 - 3 mm Dicke.

Die erfindungsgemäßen Polyamidzusammensetzungen enthalten als Komponente A ein oder mehrere Polyamide mit einem Schmelzpunkt von kleiner gleich 290 °C. Der Schmelzpunkt wird dabei mittels Diffential-Scanning-Kalorimetrie (DSC) bei einer Aufheizrate von 10 K/Sekunde bestimmt.

Bei den Polyamiden der Komponente A handelt es sich in der Regel um Homo- oder Copolyamide, die sich von (cyclo)aliphatischen Dicarbonsäuren oder deren polyamidbildenden Derivaten, wie deren Salzen, und von (cyclo)aliphatischen Diaminen oder von (cyclo)aliphatischen Aminocarbonsäuren oder deren polyamidbildenden Derivaten, wie deren Salzen, ableiten.

Bei den erfindungsgemäß als Komponente A eingesetzten Polyamiden handelt es sich um thermoplastische Polyamide.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß als Komponente A eingesetzten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet. Geeignet sind auch Gemische mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es sich wie hier um glasfaserverstärkte Polyamide handelt. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A einzusetzende Polyamide sind teilkristalline aliphatische Polyamide, die ausgehend von aliphatischen Diaminen und aliphatischen Dicarbonsäuren und/oder cycloaliphatischen Lactamen mit wenigstens 5 Ringgliedern oder entsprechenden Aminosäuren hergestellt werden können.

Als Edukte kommen aliphatische Dicarbonsäuren, bevorzugt Adipinsäure, 2,2,4- und 2,4,4-Trimethyladipinsäure, Azelainsäure und/oder Sebazinsäure, aliphatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird ε-Caprolactam eingesetzt.

Bevorzugt handelt es sich bei den erfindungsgemäß eingesetzten aliphatischen Homo- oder Copolyamiden um Polyamid 12, Polyamid 4, Polyamid 4.6, Polyamid 6, Polyamid 6.6, Polyamid 6.9, Polyamid 6.10, Polyamid 6.12, Polyamid 6.66, Polyamid 7.7, Polyamid 8.8, Polyamid 9.9, Polyamid 10.9, Polyamid 10.10, Polyamid 11 oder Polyamid 12. Diese sind z. B. unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Besonders geeignet sind weiterhin auf PA6, PA6.6 und anderen aliphatischen Homo- oder Copolyamiden basierende Compounds, bei denen auf eine Polyamidgruppe in der Polymerkette 3 bis 11 Methylengruppen kommen.

Bevorzugt werden flammhemmende Polyamidzusammensetzungen, bei denen als Komponente A ein oder mehrere Polyamide ausgewählt ist aus der Gruppe bestehend aus PA 6, PA 6.6, PA 4.6, PA 12, PA 6.10 eingesetzt werden.

Besonders bevorzugt werden flammhemmende Polyamidzusammensetzungen, bei denen als Komponente A Polyamid 6.6 oder Polymer-Gemische aus Polyamid 6.6 und Polyamid 6 eingesetzt werden.

Ganz besonders bevorzugt werden flammhemmende Polyamidzusammensetzungen, bei denen Komponente A zu mindestens 75 Gew.-% aus Polyamid 6.6 und zu höchstens 25 Gew.-% aus Polyamid 6 besteht.

Als Komponente B werden Füllstoffe und/oder Verstärkungsstoffe eingesetzt, bevorzugt Glasfasern. Es können auch Mischungen aus zwei oder mehreren unterschiedlichen Füllstoffen und/oder Verstärkungsstoffen, eingesetzt werden. Bevorzugte Füllstoffe sind mineralische teilchenförmige Füllstoffe auf der Basis von Talk, Glimmer, Silikat, Quarz, Titandioxid, Wollastonit, Kaolin, amorphe Kieselsäuren, nanoskaligen Mineralien, besonders bevorzugt Montmorilloniten oder Nano-Böhmiten, Magnesiumcarbonat, Kreide, Feldspat,Glaskugeln und/oder Bariumsulfat. Besonders bevorzugt werden mineralische teilchenförmige Füllstoffe auf der Basis von Talk, Wollastonit und/oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt sind nadelförmige Wollastonite. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß als Komponente B eingesetzten nadelförmigen mineralischen Füllstoffe liegt bevorzugt bei kleiner 20 µm, besonders bevorzugt bei kleiner 15 µm, insbesondere bevorzugt bei kleiner 10 µm, bestimmt mit einem CILAS Granulometer.

Bei den erfindungsgemäß vorzugsweise eingesetzten Komponenten B handelt es sich um Verstärkungsstoffe. Dabei kann es sich beispielsweise um Verstärkungsstoffe auf der Basis von Kohlenstofffasern und/oder von Glasfasern handeln.

Der Füllstoff und/oder Verstärkungsstoff kann in einer bevorzugten Ausführungsform oberflächenmodifiziert sein, vorzugsweise mit einem Haftvermittler bzw. einem Haftvermittlersystem, besonders bevorzugt auf Silanbasis. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Bei den erfindungsgemäß als Komponente B bevorzugt eingesetzten Glasfasern kann es sich um Kurzglasfasern und/oder um Langglasfasern handeln. Als Kurz- oder Langglasfasern können Schnittfasern eingesetzt werden. Kurzglasfasern können auch in Form von gemahlenen Glasfasern zum Einsatz kommen. Daneben können Glasfasern außerdem in der Form von Endlosfasern eingesetzt werden, beispielsweise in der Form von Rovings, Monofilamenten, Filamentgarnen oder Zwirnen, oder Glasfasern können in der Form von textilen Flächengebilden eingesetzt werden, beispielsweise als Glasgewebe, als Glasgeflecht oder als Glasmatte.

Typische Faserlängen für Kurzglasfasern vor dem Einarbeiten in die Polyamidmatrix bewegen sich im Bereich von 0,05 bis 10 mm, vorzugsweise von 0,1 bis 5 mm. Nach dem Einarbeiten in die Polyamidmatrix hat sich die Länge der Glasfasern verringert. Typische Faserlängen für Kurzglasfasern nach dem Einarbeiten in die Polyamidmatrix bewegen sich im Bereich von 0,01 bis 2 mm, vorzugsweise von 0,02 bis 1 mm.

Die Durchmesser der einzelnen Fasern kann in weiten Bereichen schwanken. Typische Durchmesser der einzelnen Fasern bewegen sich im Bereich von 5 bis 20 µm.

Die Glasfasern können beliebige Querschnittsformen aufweisen, beispielsweise runde, elliptische, n-eckige oder irreguläre Querschnitte. Es können Glasfasern mit mono- oder multilobalen Querschnitten verwendet werden.

Glasfasern können als Endlosfasern oder als geschnittene oder gemahlene Glasfasern eingesetzt werden.

Die Glasfasern selbst, unabhängig von deren Querschnittfläche und deren Länge, können dabei beispielsweise ausgewählt sein aus der Gruppe der E-Glasfasern, A-Glasfasern, C-Glasfasern, D-Glasfasern, M-Glasfasern, S-Glasfasern, R-Glasfasern und/oder ECR-Glasfasern, wobei die E-Glasfasern, R-Glasfasern, S-Glasfasern und ECR-Glasfasern besonders bevorzugt sind. Die Glasfasern sind vorzugsweise mit einer Schlichte versehen, welche vorzugsweise Polyurethan als Filmbildner und Aminosilan als Haftvermittler enthält.

Besonders bevorzugt eingesetzte E-Glasfasern weisen folgende chemische Zusammensetzung auf: SiO₂ 50-56 %; Al₂O₃ 12-16 %; CaO 16-25 %; MgO ≤ 6 %; B₂O₃ 6-13 %; F ≤ 0,7 %; Na₂O 0,3-2 %; K₂O 0,2-0,5 %; Fe₂O₃ 0,3 %.

Besonders bevorzugt eingesetzte R-Glasfasern weisen folgende chemische Zusammensetzung auf: SiO₂ 50-65 %; Al₂O₃ 20-30 %; CaO 6-16 %; MgO 5-20 %; Na₂O 0,3-0,5 %; K₂O 0,05-0,2 %; Fe₂O₃ 0,2-0,4 %, TiO₂ 0,1-0,3 %.

Besonders bevorzugt eingesetzte ECR-Glasfasern weisen folgende chemische Zusammensetzung auf: SiO₂ 57,5-58,5 %; Al₂O₃ 17,5-19,0 %; CaO 11,5-13,0 %; MgO 9,5-11,5.

Die erfindungsgemäß als Komponente C eingesetzten Salze von Diethylphospinsäure sind bekannte Flammschutzmittel für polymere Formmassen.

Auch Salze von Diethylphosphinsäure mit Anteilen der erfindungsgemäß als Komponenten D und E eingesetzten Phosphinsäure- und Phosphonsäuresalze sind bekannte Flammschutzmittel. Die Herstellung dieser Stoffkombinationen wird z. B. in US 7,420,007 B2 beschrieben.

Die erfindungsgemäß eingesetzten Salze von Diethylphosphinsäure der Komponente C können geringe Mengen an Salzen der Komponente D und an Salzen der Komponente E enthalten, beispielsweise bis zu 10 Gew.-% an Komponente D, vorzugsweise 0,01 bis 6 Gew. %, und insbesondere 0,2 bis 2,5 Gew.-% davon, und bis zu 10 Gew.-% an Komponente E, vorzugsweise 0,01 bis 6 Gew. %, und insbesondere 0,2 bis 2,5 Gew.-% davon bezogen auf die Menge an Komponenten C, D und E.

Die erfindungsgemäß als Komponente E eingesetzten Salze der Ethylphosphonsäure sind als Zusätze zu Diethylphospinaten in Flammschutzmitteln für polymere Formmassen ebenfalls bekannt, beispielsweise aus WO 2016/065971 A1.

Auch die Verwendung der erfindungsgemäß als Komponente F eingesetzten Polyphosphatderivate von Melamin mit einem Kondensationsgrad von größer gleich 20 als Flammschutzmittel ist bekannt. So offenbart die DE 10 2005 016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphinsäuresalz kombiniert werden kann.

Erfindungsgemäße flammhemmende Polyamidzusammensetzungen enthalten als Komponente F ein Melaminpolyphosphat, dessen durchschnittlicher Kondensationsgrad 20 bis 200, insbesondere von 40 bis 150, beträgt.

In einem anderen bevorzugten Bereich beträgt der durchschnittliche Kondensationsgrad 20 bis 100.

Weitere bevorzugte erfindungsgemäße flammhemmende Polyamidzusammensetzungen enthalten als Komponente F ein Melaminpolyphosphat, das eine Zersetzungstemperatur von größer gleich 320 °C, insbesondere von größer gleich 360 °C und ganz besonders bevorzugt von größer gleich 400 °C aufweist.

Bevorzugt werden als Komponente F Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

Ebenfalls bevorzugt werden Melaminpolyphosphate eingesetzt, deren mittlerer Kondensationsgrat (Zahlenmittel) >20 ist, deren Zersetzungstemperatur größer als 320 °C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25 °C 5 oder höher ist, vorzugsweise 5,1 bis 6,9.

In einer weiteren bevorzugten Ausführungsform liegen Komponenten C, D, E und F in Teilchenform vor, wobei die mittlere Teilchengröße (d₅₀) 1 bis 100 µm beträgt.

Bei den erfindungsgemäß als Komponente G zugesetzten Wachsen handelt es sich um an sich bekannte Verbindungen; diese werden ausgewählt aus der Gruppe der Polyolefinwachse, Amidwachse, natürlichen Wachse, langkettigen aliphatischen Carbonsäuren (Fettsäuren) und/oder deren Estern oder Salzen.

Die erfindungsgemäß als Komponente G eingesetzten Wachse können sowohl als solche oder in polar modifizierter Form eingesetzt werden. Eine polare Modifizierung lässt sich beispielsweise durch Oxidation mit Luft oder mit sauerstoff-haltigen Gasen oder durch Aufpfropfung von z. B. ungesättigten Carbonsäuren wie etwa Maleinsäure erreichen. Beispiele für die oxidative Modifizierung finden sich in EP 0 890 583 A1. Beispiele für die Modifizierung mit ungesättigten Carbonsäuren finden sich in EP 0 941 257 B1.

Es können auch Gemische unterschiedlicher Wachse eingesetzt werden.

Beispiele für erfindungsgemäß als Komponente G eingesetzte Polyolefinwachse sind solche, die durch die Polymerisation von ein oder mehreren α-Olefinen, insbesondere mit Metallocen-Katalysatoren, erhalten werden können. Beispiele für Metallocene sowie deren Verwendung zur Herstellung von Polyolefinwachsen sind beispielsweise in EP 0 571 882 A2 zu finden.

Bevorzugt als Komponente G eingesetzte Polyolefinwachse sind PE-Wachse, PTFE-Wachse, PP-Wachse, FT-Paraffine, makro- und mikrokristalline Paraffine und polare Polyolefinwachse.

Beispiele für PE-Wachse sind Polyethylen-Homo- und Copolymerwachse, die insbesondere mittels Metallocenkatalyse hergestellt wurden, und die ein zahlenmittleres Molekulargewicht von 700 bis 10.000 g/mol bei einem Tropfpunkt zwischen 80 und 140 °C aufweisen.

Beispiele für PTFE-Wachse sind Polytetrafluoroethylene mit einem Molekulargewicht zwischen 30.000 und 2.000. 000 g/mol, insbesondere zwischen 100.000 und 1.000. 000 g/mol.

Beispiele für PP-Wachse sind Polypropylen-Homo-und Copolymerwachse, die insbesondere mittels Metallocenkatalyse hergestellt wurden, und die ein zahlenmittleres Molekulargewicht von 700 bis 10.000 g/mol bei einem Tropfpunkt zwischen 80 und 160 °C aufweisen.

Beispiele für FT-Wachse sind Fischer-Tropsch-Paraffine (FT-Paraffine) mit einem zahlenmittleren Molekulargewicht von 400 bis 800 g/mol bei einem Tropfpunkt von 80 bis 125 °C.

Beispiele für makro-und mikrokristalline Paraffine sind Paraffine und mikrokristalline Wachse, welche bei der Erdölraffination anfallen. Die Tropfpunkte solcher Paraffine liegen vorzugsweise zwischen 45 und 65 °C, die solcher mikrokristallinen Wachse vorzugsweise zwischen 73 und 100 °C.

Beispiele für polare Polyolefinwachse sind Verbindungen, die durch Oxidation von Ethylen- oder Propylen-Homopolymer-und-Copolymerwachsen oder durch deren Pfropfung mit Maleinsäureanhydrid herstellbar sind. Besonders bevorzugt werden hierfür Polyolefinwachse mit einem Tropfpunkt zwischen 90 und 165 °C, insbesondere zwischen 100 und 160 °C, einer Schmelzviskosität bei 140 °C (Polyethylenwachse) oder bei 170 °C (Polypropylenwachse) zwischen 10 und 10000 mPas, insbesondere zwischen 50 und 5000 mPas, und einer Dichte bei 20 °C zwischen 0,85 und 0,96 g/cm³.

Besonders bevorzugt als Komponente G eingesetzte Wachse sind Amidwachse. Dabei handelt es sich um Wachse, die herstellbar sind durch Umsetzung von Ammoniak oder Alkylendiamin, wie Ethylendiamin oder Hexamethylendiamin, mit gesättigten und/oder ungesättigten Fettsäuren. Bei den Fettsäuren handelt es sich um langkettige Carbonsäuren mit vorzugsweise 14 bis 40 Kohlenstoffatomen, beispielsweise um Stearinsäure, Talgfettsäure, Palmitinsäure oder Erucasäure.

Weitere bevorzugt als Komponente G eingesetzte Wachse sind natürliche Wachse. Dabei handelt es sich beispielsweise um Carnaubawachs oder Candelillawachs.

Weitere bevorzugt als Komponente G eingesetzte Wachse sind langkettige aliphatische Carbonsäuren (Fettsäuren) und/oder deren Ester oder Salzewobei die aliphatischen Carbonsäuren Kettenlängen von C₁₄ bis C₄₀ aufweisen.

Beispiele für Säure- und Esterwachse sind Montanwachse. Diese enthalten Fettsäuren und deren Ester mit einer Kohlenstoffkettenlänge der Carbonsäure von C22 bis C36.

Bevorzugte Esterwachse sind Umsetzungsprodukte von Montanwachssäuren mit ein- oder mehrwertigen Alkoholen mit 2 bis 6 C-Atomen, wie zum Beispiel Ethandiol, Butan-1, 3-diol, Propan-1,2, 3-triol oder Pentaerythrit.

Weitere Beispiele für bevorzugt eingesetzte Esterwachse sind Sorbitanester. Dabei handelt es sich um Umsetzungsprodukte von Sorbit (Sorbitol) mit gesättigten und/oder ungesättigten Fettsäuren und/oder Montansäuren, beispielsweise mit Stearinsäure, Talgfettsäure, Palmitinsäure oder Erucasäure.

Besonders bevorzugt als Komponente G eingesetzte Wachse sind Ester oder Salze von langkettigen aliphatischen Carbonsäuren (Fettsäuren), die Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali-, Erdalkali-, Aluminium- oder Zinksalze in Betracht.

Ganz besonders bevorzugt handelt es sich bei der Komponente G um Ester oder Salze der Stearinsäure, wie z. B. um Glycerinmonostearat oder Pentaerythrittetrastearat oder um Calcium-, Aluminium- oder Zinkstearat.

Ganz besonders bevorzugt handelt es sich bei der Komponente G um Umsetzungsprodukte von Montanwachssäuren mit Alkylenglykol, insbesondere mit Ethylenglykol.

Davon sind insbesondere bevorzugt Mischungen aus Ethylenglykol-Mono-Montanwachssäureester, Ethylenglykol-Di-Montanwachssäureester, Montanwachssäuren und Ethylenglykol.

Ebenfalls besonders bevorzugt handelt es sich bei der Komponente G um Umsetzungsprodukte von Montanwachssäuren mit einem Calcium-, Aluminium- oder Zinksalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

In einer weiteren besonders bevorzugten Ausführungsform handelt es sich bei Komponente G um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die erfindungsgemäßen Polyamidzusammensetzungen können als Komponente I noch weitere Additive enthalten. Bevorzugte Komponenten I im Sinne der vorliegenden Erfindung sind Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungshilfsmittel, Schlagzähmodifikatoren, Farbstoffe, Pigmente und/oder weitere Flammschutzmittel, die sich von Komponenten C, D, E, F und H unterscheiden.

Hierzu gehören insbesondere Phosphate, wie etwa Melamin-Poly(Metallphosphate). Bevorzugte Metalle hierfür sind die Elemente der 2. Hauptgruppe, der 3. Hauptgruppe, der 2. Nebengruppe, der 4. Nebengruppe und der Nebengruppe Vllla des Periodensystems sowie Cer und/oder Lanthan.

Melamin-Poly(Metallphosphate) sind bevorzugt Melamin-Poly(Zinkphosphate), Melamin-Poly(Magnsiumphosphate) und/oder Melamin-Poly(Calciumphosphate).

Bevorzugt sind (Melamin)₂Mg(HPO₄)₂, (Melamin)₂Ca(HPO₄)₂, (Melamin)₂Zn(HPO4)₂, (Melamin)₃Al(HPO₄)₃, (Melamin)₂Mg(P₂O₇), (Melamin)₂Ca(P₂O₇), (Melamin)₂Zn(P₂O₇), (Melamin)₃Al(P₂O₇)_{3/2}.

Bevorzugt sind Melamin-Poly(Metallphosphate), die bekannt sind als Hydrogenphosphato- oder Pyrophosphato-Metallate mit Komplex-Anionen, die ein vier- oder sechsbindiges Metallatom als Koordinationszentrum mit zweizähnigen Hydrogenphosphat- oder Pyrophosphat-Liganden aufweisen.

Bevorzugt sind auch Melamin-interkalierte Aluminium-, Zink- oder Magnesium-Salze von kondensierten Phosphaten, ganz besonders bevorzugt sind Bis-Melamin-zinkodiphosphat und/oder Bis-Melamin-alumotriphosphat.

Bevorzugt sind weiterhin Salze der Elemente der 2. Hauptgruppe, der 3. Hauptgruppe, der 2. Nebengruppe, der 4. Nebengruppe und der Nebengruppe Vllla des Periodensystems sowie von Cer und/oder Lanthan mit Anionen der Oxosäuren der fünften Hauptgruppe (Phosphate, Pyrophosphate und Polyphosphate).

Bevorzugt sind Aluminiumphosphate, Aluminum monophosphate; Aluminumorthophosphate (AlPO₄), Aluminumhydrogenphosphat (Al₂(HPO₄)₃) und/oder Aluminiumdihydrogenphosphat Bevorzugt sind auch Calciumphosphat, Zinkphosphat, Titanphosphat und/oder Eisenphosphat
Bevorzugt sind Calciumhydrogenphosphat, Calciumhydrogenphosphatdihydrat, Magnesiumhydrogenphosphat, Titaniumhydrogenphosphat (TIHC) und/oder Zinkhydrogenphosphat

Bevorzugt sind Aluminiumdihydrogenphosphat, Magnesiumdihydrogenphosphat , Calciumdihydrogenphosphat, Zinkdihydrogenphosphat, Zinkdihydrogenphosphat dihydrat und/oder Aluminumdihydrogenphosphat.

Besonders bevorzugt sind Calciumpyrophosphat, Calciumdihydrogenpyrophosphat, Magnesiumpyrophosphat Zinkpyrophosphat und/oder Aluminiumpyrophosphat.

Die vorgenannten sowie andere und ähnliche Phosphate werden beispielsweise durch die Firma J.M. Huber Corporation, USA, unter Satire^{®} Products angeboten, hierzu gehören etwa die Typen APP Type II, AMPP, MPP, MPyP, PiPyP. PPaz, Satire^{®} 400, Satire^{®} 600, EDAP und andere.

Weitere Phosphate sind beispielsweise in der JP-A-2004204194, der DE-A-102007036465 und der EP-A-3133112 genannt und gehören ausdrücklich zu den einsetzbaren Komponenten I.

Die weiteren Additive sind als Zusätze zu Polyamidzusammensetzungen an sich bekannt und können alleine oder in Mischung oder in Form von Masterbatches eingesetzt werden.

Die vorgenannten Komponenten A, B, C, D, E, F, G und gegebenenfalls H und/oder I können in den verschiedensten Kombinationen zur erfindungsgemäßen flammgeschützten Polyamidzusammensetzung verarbeitet werden. So ist es möglich, bereits zu Beginn oder am Ende der Polykondensation oder in einem folgenden Compoundierprozess die Komponenten in die Polyamidschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polyamidzusammensetzungen vor dem Einbringen in die Polyamidmatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polyamidzusammensetzungen können auch Granulate hergestellt werden, die anschließend in die Polyamidmatrix eingebracht werden können.

Dazu können zwei oder mehr Komponenten der erfindungsgemäßen Polyamidzusammensetzung mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polyamidzusammensetzung oder zwei oder mehrere Komponenten davon kann in einer Ausführungsform durch Rollkompaktierung hergestellt werden.

Die erfindungsgemäße Polyamidzusammensetzung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoated) werden.

Die erfindungsgemäße Polyamidzusammensetzung oder zwei oder mehrere Komponenten davon kann in einer Ausführungsform durch Sprühgranulierung hergestellt werden.

Die erfindungsgemäße flammgeschützte Polymerformmasse liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Gegenstand der Erfindung sind auch Formteile hergestellt aus der oben beschriebenen flammhemmenden Polyamidzusammensetzung enthaltend die Komponenten A, B, C, D, E, F und G und gegebenenfalls die Komponenten H und/oder I.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polyamidformmassen durch beliebige Formverfahren, insbesondere durch Spritzguss oder Extrusion.

Die Herstellung der erfindungsgemäßen flammgeschützten Polyamid-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der flammgeschützten Polyamid-Formmasse.

Bei den Formteilen handelt es sich vorzugsweise sich um Spritzgussteile oder um Extrusionsteile.

Die erfindungsgemäßen flammgeschützten Polyamidzusammensetzungen eignen sich zur Herstellung von Fasern, Folien und Formkörpern, insbesondere für Anwendungen im Elektro- und Elektronikbereich.

Die Erfindung betrifft bevorzugt die Verwendung der erfindungsgemäßen flammgeschützten Polyamidzusammensetzungen in oder für Steckverbinder, stromberührten Teilen in Stromverteilern (FI-Schutz), Platinen, Vergussmassen, Stromsteckern, Schutzschaltern, Lampengehäusen, LED Gehäusen, Kondensatorgehäusen, Spulenkörpern und Ventilatoren, Schutzkontakten, Steckern, in/auf Platinen, Gehäusen für Stecker, Kabeln, flexiblen Leiterplatten, Ladekabeln für Handys, Motorabdeckungen oder Textilbeschichtungen.

Die Erfindung betrifft ebenfalls bevorzugt die Verwendung der erfindungsgemäßen flammgeschützten Polyamidzusammensetzungen zur Herstellung von Formkörpern in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und besonders bevorzugt von weniger als 0,5 mm Wandstärke.

Die nachfolgenden Beispiele erläutern die Erfindung ohne diese zu begrenzen.
1. Eingesetzte Komponenten
   Handelsübliche Polyamide (Komponente A):
      Polyamid 6.6 (PA 6.6-GV; Schmelzbereich von 255-260 °C): Ultramid^{®} A27 (BASF)
      Polyamid 6 (Schmelzbereich von 217-222 °C): Durethan^{®} B29 (Lanxess)
      Polyamid 6T/6.6 (Schmelzbereich von 310-320 °C): Vestamid^{®} HAT plus 1000 (Evonik)
   Glasfasern (Komponente B):
      Glasfasern PPG HP 3610 10µm Durchmesser, 4,5 mm Länge (Fa. PPG, NL)
   Flammschutzmittel FM 1 (Komponenten C, D und E):
      Aluminiumsalz der Diethylphosphinsäure enthaltend 0,9 mol % an Aluminium-Ethylbutylphosphinat und 0,5 mol % an Aluminium-Ethylphosphonat hergestellt nach Beispiel 3 der US 7,420,007 B2
   Flammschutzmittel FM 2 (Komponenten C, D und E):
      Aluminiumsalz der Diethylphosphinsäure enthaltend 2,7 mol % an Aluminium-Ethylbutylphosphinat und 0,8 mol % an Aluminium-Ethylphosphonat hergestellt nach Beispiel 4 der US 7,420,007 B2
   Flammschutzmittel FM 3 (Komponenten C, D und E):
      Aluminiumsalz der Diethylphosphinsäure enthaltend 0,5 mol % an Aluminium-Ethylbutylphosphinat und 0,05 mol % an Aluminium-Ethylphosphonat hergestellt nach dem Verfahren gemäß US 7,420,007 B2
   Flammschutzmittel FM 4 (Komponenten C, D und E):
      Aluminiumsalz der Diethylphosphinsäure enthaltend 10 mol % an Aluminium-Ethylbutylphosphinat und 5 mol % an Aluminium-Ethylphosphonat hergestellt nach dem Verfahren gemäß US 7,420,007 B2
   Flammschutzmittel FM 5 (Komponente C):
      Aluminiumsalz der Diethylphosphinsäure hergestellt in Analogie zu Beispiel 1 der DE 196 07 635 A1
   Flammschutzmittel FM 6 (Komponenten C und E):
      Aluminiumsalz der Diethylphosphinsäure enthaltend 8,8 mol % an Aluminium-Ethylphosphonat
   Flammschutzmittel FM 7 (Komponente H):
      Aluminiumsalz der Phosphonsäure hergestellt nach Beispiel 1 der DE 102011120218 A1
   Flammschutzmittel FM 8 (Komponente F):
      Melamin-Polyphosphat hergestellt nach dem Beispiel der WO 2000/002869 A1
   Flammschutzmittel FM 9 (nicht erfindungsgemäß):
      Melamin-Polyphosphat mit einem mittleren Kondensationsgrad von 18 hergestellt in Analogie zu WO 2000/002869 A1
   Wachs 1 (Komponente G)
      Licomont^{®} CaV 102 (Ca-Salz der Montanwachssäure), Fa. Clariant Produkte (Deutschland) GmbH
   Wachs 2 (Komponente G):
      Licowax^{®} E (Ester der Montanwachssäure), Fa. Clariant Produkte (Deutschland) GmbH
2. Herstellung, Verarbeitung und Prüfung von flammhemmenden Polyamid-Formmassen

Die Flammschutzmittelkomponenten wurden in dem in den Tabellen angegebenen Verhältnissen mit dem Wachs vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PA 6 bzw. bei 310 bis 330 °C PA 6T/6.6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 320 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Der Comparative Tracking Index der Formteile wurde gemäß dem International Electrotechnical Commission Standard IEC-60112/3 ermittelt.

Der Glow Wire Flammability Index (GWIT-Index) wurde nach der Norm IEC-60695-2-12 ermittelt.

Die Beschaffenheit der Oberfläche des Formteils wurde visuell beurteilt.

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

### Beispiele 1-6, 1a, 1b, 5a und Vergleichsbeispiele V1-V12 m it PA 6.6

Die Ergebnisse der Versuche mit PA 6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

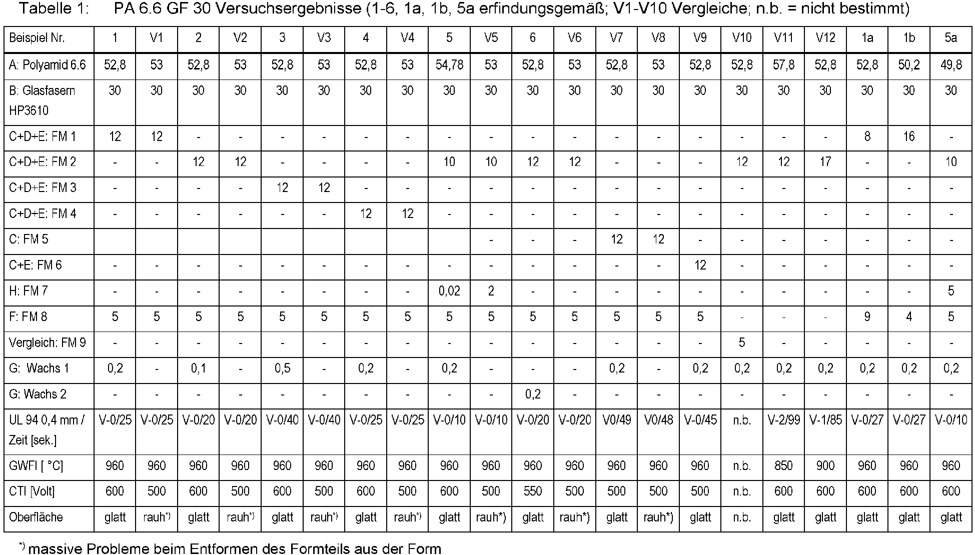

Die erfindungsgemäßen Polyamidzusammensetzungen der Beispiele 1 bis 6, 1a, 1b und 5a sind Formmassen, welche die Brandklasse UL 94 V-0 bei 0,4 mm erreichen, gleichzeitig CTI 600 Volt bzw. 550 Volt und GWFI 960 °C aufweisen, und glatte Oberflächen besitzen. Der Austausch von Wachs 2 durch Wachs 1 bewirkte eine Vergrößerung des CTI-Wertes. Die hergestellten Formteile konnten problemlos entformt werden. Der Zusatz von Komponente H in Beispielen 5 und 5a führt zu einer nochmaligen Verbesserung des Flammschutzes ausgedrückt durch eine verringerte Nachbrennzeit.

Das Weglassen von Komponente G in Vergleichsbeispielen V1 bis V6 führte zu Formteilen mit rauhen Oberflächen, die sich darüber hinaus nur unter Schwierigkeiten entformen ließen. Flammfestigkeit und GWFI-Werte entsprachen den Werten für die Formteile, welche Komponente G enthielten. Die CTI-Werte verringerten sich im Vergleich zu den Formteilen, welche Komponente G enthielten.

Das Weglassen von Komponenten D und E in Vergleichsbeispielen V7 und V8 hatte neben einer verlängerten Nachbrennzeit einen im Vergleich zu den Beispielen 1-4 verringerten CTI-Wert zur Folge. Das Formteil gemäß Vergleichs-beispiel V8 hatte darüber hinaus eine rauhe Oberfläche und ließ sich nur schwierig entformen.

Das Weglassen von Komponente D in Vergleichsbeispiel V9 hatte neben einer verlängerten Nachbrennzeit einen im Vergleich zu den Beispielen 1-4 verringerten CTI-Wert zur Folge.

Das Ersetzen von Komponente F durch eine Komponente mit niedrigerem Kondensationsgrad in Vergleichsbeispiel V10 hatte zur Folge, dass der Polyamidstrang bei der Herstellung aufschäumte und keine Messungen vorgenommen werden konnten.

Das Weglassen von Komponente F in Vergleichsbeispiel V11 hatte neben einer im Vergleich zu Beispiel 2 Verschlechterung der Brandschutzklasse einen verringerten und GWFI-Wert zur Folge.

In Vergleichsbeispiel V12 wurde durch Erhöhung der Konzentration an Komponenten C, D und E im Vergleich zu Beispiel V11 zwar eine Verbesserung der Brandschutzklasse erreicht. Allerdings zeigte diese Polyamidzusammensetzung immer noch eine im Vergleich zu Beispiel 2 geringere Brandschutzklasse sowie einen verringerten GWFI-Wert.

### Beispiele 7-12 und Vergleichsbeispiele V12-V26 mit PA 6.6/PA6

Die Ergebnisse der Versuche mit PA 6/PA6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

**Tabelle 2: PA 6/PA 6.6 GF 30 Versuchsergebnisse (7-12 erfindungsgemäß; V11-V20 Vergleiche; n.b. = nicht bestimmt)**

| Beispiel Nr. | 7 | V12 | 8 | V13 | 9 | V14 | 10 | V15 | 11 | V16 | 12 | V17 | V18 | V19 | V20 | V21 | V22 | V23 |
|---|---|---|---|---|---|---|---|---|---|---|---|---|---|---|---|---|---|---|
| A: Polyamid 6.6 | 37,8 | 38 | 37,8 | 38 | 37,8 | 38 | 37,8 | 38 | 37,8 | 38 | 37,8 | 38 | 37,8 | 38 | 37,8 | 37,8 | 42,8 | 37,8 |
| A: Polyamid 6 | 15 | 15 | 15 | 15 | 15 | 15 | 15 | 15 | 15 | 15 | 15 | 15 | 15 | 15 | 15 | 15 | 15 | 15 |
| B: Glasfasern HP3610 | 30 | 30 | 30 | 30 | 30 | 30 | 30 | 30 | 30 | 30 | 30 | 30 | 30 | 30 | 30 | 30 | 30 | 30 |
| C+D+E: FM 1 | 12 | 12 | - | - | - | - | - | - | - | - | - | - | - | - | - | - | - | - |
| C+D+E: FM 2 | - | - | 12 | 12 | - | - | - | - | 10 | 10 | 12 | 12 | - | - | - | 12 | 12 | 17 |
| C+D+E: FM 3 | - | - | - | - | 12 | 12 | - | - | - | - | - | - | - | - | - | - | - | - |
| C+D+E: FM 4 | - | - | - | - | - | - | 12 | 12 | - | - | - | - | - | - | - | - | - | - |
| C: FM 5 | - | - | - | - | - | - | - | - | - | - | - | - | 12 | 12 | - | - | - | - |
| C+E: FM 6 | - | - | - | - | - | - | - | - | - | - | - | - | - | - | 12 | - | - | - |
| H: FM 7 | - | - | - | - | - | - | - | - | 2 | 2 | - | - | - | - | - | - | - | - |
| F: FM 8 | 5 | 5 | 5 | 5 | 5 | 5 | 5 | 5 | 5 | 5 | 5 | 5 | 5 | 5 | 5 | - | - | - |
| Vergleich: FM 9 | - | - | - | - | - | - | - | - | - | - | - | - | - | - | - | 5 | - | - |
| G: Wachs 1 | 0,2 | - | 0,2 | - | 0,2 | - | 0,2 | - | 0,2 | - | - | - | 0,2 | - | 0,2 | 0,2 | 0,2 | 0,2 |
| G: Wachs 2 | - | - | - | - | - | - | - | - | - | - | 0,2 | - | - | - | - | - | - | - |
| UL94 0,4mm/Zeit[sek. | V-0/29 | V-0/29 | V-0/23 | V-0/23 | V-0/44 | V-0/44 | V-0/28 | V-0/28 | V-0/14 | V-0/14 | V-0/23 | V-0/23 | V-0/49 | V-0/49 | V-0/47 | n.b. | V-2/103 | V-1/89 |
| GWFI [ °C] | 960 | 960 | 960 | 960 | 960 | 960 | 960 | 960 | 960 | 960 | 960 | 960 | 960 | 960 | 960 | n.b. | 850 | 900 |
| CTI [Volt] | 600 | 500 | 600 | 500 | 600 | 500 | 600 | 500 | 600 | 500 | 550 | 500 | 500 | 500 | 500 | n.b. | 600 | 600 |
| Oberfläche | glatt | rauh*) | glatt | rauh*) | glatt | rauh*) | glatt | rauh*) | glatt | rauh*) | glatt | rauh*) | glatt | rauh*) | glatt | n.b. | glatt | glatt |

| | | | | | | | | | | | | | | | | | | |
|---|---|---|---|---|---|---|---|---|---|---|---|---|---|---|---|---|---|---|
| ^{*)} massive Probleme beim Entformen des Formteils aus der Form | | | | | | | | | | | | | | | | | | |

Die erfindungsgemäßen Polyamidzusammensetzungen der Beispiele 7 bis 12 sind Formmassen, welche die Brandklasse UL 94 V-0 bei 0,4 mm erreichen, gleichzeitig CTI 600 Volt bzw. 550 Volt und GWFI 960 °C aufweisen, und glatte Oberflächen besitzen. Der Austausch von Wachs 2 durch Wachs 1 bewirkte eine Vergrößerung des CTI-Wertes. Die hergestellten Formteile konnten problemlos entformt werden. Der Zusatz von Komponente H in Beispiel 11 führt zu einer nochmaligen Verbesserung des Flammschutzes ausgedrückt durch eine verringerte Nachbrennzeit.

Das Weglassen von Komponente G in Vergleichsbeispielen V12 bis V17 führte zu Formteilen mit rauhen Oberflächen, die sich darüber hinaus nur unter Schwierigkeiten entformen ließen. Flammfestigkeit und GWFI-Werte entsprachen den Werten für die Formteile, welche Komponente G enthielten. Die CTI-Werte verringerten sich im Vergleich zu den Formteilen, welche Komponente G enthielten.

Das Weglassen von Komponenten D und E in Vergleichsbeispielen V18 und V19 hatte neben einer verlängerten Nachbrennzeit einen im Vergleich zu den Beispielen 7-10 verringerten CTI-Wert zur Folge. Das Formteil gemäß Vergleichs-beispiel V19 ließ sich darüber hinaus nur schwer entformen und wies eine rauhe Oberfläche auf.

Das Weglassen von Komponente D in Vergleichsbeispiel V20 hatte neben einer verlängerten Nachbrennzeit einen im Vergleich zu den Beispielen 7-10 verringerten CTI-Wert zur Folge.

Das Ersetzen von Komponente F durch eine Komponente mit niedrigerem Kondensationsgrad in Vergleichsbeispiel V21 hatte zur Folge, dass der Polyamidstrang bei der Herstellung aufschäumte und keine Messungen vorgenommen werden konnten.

Das Weglassen von Komponente F in Vergleichsbeispiel V22 hatte neben einer im Vergleich zu Beispiel 8 Verschlechterung der Brandschutzklasse einen verringerten und GWFI-Wert zur Folge.

In Vergleichsbeispiel V23 wurde durch Erhöhung der Konzentration an Komponenten C, D und E im Vergleich zu Beispiel V22 zwar eine Verbesserung der Brandschutzklasse erreicht. Allerdings zeigte diese Polyamidzusammensetzung immer noch eine im Vergleich zu Beispiel 8 geringere Brandschutzklasse sowie einen verringerten GWFI-Wert.

### Vergleichsbeispiele V24-V29 mit PA 6T/6.6

Die Ergebnisse der Versuche mit PA 6T/6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

**Tabelle 3: PA 6T/6.6 GF 30 Versuchsergebnisse (n.b. = nicht bestimmt)**

| Beispiel Nr. | V24 | V25 | V26 | V27 | V28 | V29 |
|---|---|---|---|---|---|---|
| A: Polyamid 6T/6.6 | 52,8 | 52,8 | 52,8 | 52,8 | 52,8 | 52,8 |
| B: Glasfasern HP3610 | 30 | 30 | 30 | 30 | 30 | 30 |
| C+D+E: FM 1 | 12 | - | - | - | - | - |
| C+D+E: FM 2 | - | 12 | - | - | 10 | - |
| C+D+E: FM 3 | - | - | 12 | - | - | - |
| C+D+E: FM 4 | - | - | - | 12 | - | - |
| C: FM 5 | - | - | - | - | - | 12 |
| C+E: FM 6 | - | - | - | - | - | - |
| I: FM 7 | - | - | - | - | 2 | - |
| F: FM 8 | 5 | 5 | 5 | 5 | 5 | 5 |
| Vergleich: FM 9 | - | - | - | - | - | - |
| G: Wachs 1 | 0,2 | 0,2 | 0,2 | 0,2 | 0,2 | 0,2 |
| UL 94 0,4 mm / Zeit [sek.] | n.b. | n.b. | n.b. | n.b. | n.b. | n.b. |
| GWFI [ °C] | n.b. | n.b. | n.b. | n.b. | n.b. | n.b. |
| MVR [cm³/10 min.] | n.b. | n.b. | n.b. | n.b. | n.b. | n.b. |
| Farbe | n.b. | n.b. | n.b. | n.b. | n.b. | n.b. |
| CTI [Volt] | n.b. | n.b. | n.b. | n.b. | n.b. | n.b. |

Aus keiner der PA-Formmassen der Vergleichsbeispiele V24-V29 konnten Prüfkörper hergestellt werden, da sich die PA-Formmassen als nicht verarbeitbar erwiesen. Die Polyamidstränge schäumten bei der Herstellung auf und es konnten keine für die Messungen geeigneten Prüfkörper hergestellt werden.

## Patentansprüche

1. Flammhemmende Polyamidzusammensetzungen enthaltend
- 25 bis 95 Gew.-% thermoplastisches Polyamid mit einem Schmelzpunkt von kleiner gleich 290 °C, bestimmt mittels Differential-Scanning-Kalorimetrie (DSC) bei einer Aufheizrate von 10 K/Sekunde, als Komponente A,
- 1 bis 45 Gew.-% Füllstoffe und/oder Verstärkungsstoffe als Komponente B,
- 1 bis 35 Gew.-% Phosphinsäuresalz der Formel (I) als Komponente C 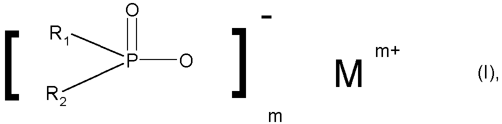
worin R₁ und R₂ Ethyl bedeuten,
M Al, Fe, TiOₚ oder Zn ist,
m 2 bis 3 bedeutet, und
p = (4 - m ) / 2 ist
- 0,01 bis 3 Gew.-% Verbindung ausgewählt aus der Gruppe der Al-, Fe-, TiOₚ- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel II als Komponente E 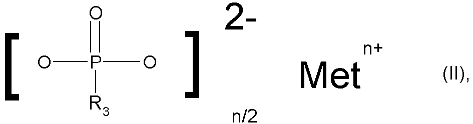
worin R₃ Ethyl bedeutet,
Met Al, TiO_{q} oder Zn ist,
n 2 bis 3 bedeutet, und
q = (4 - n) / 2 ist
- 1 bis 25 Gew.-% Melaminpolyphosphat mit einem mittleren Kondensationsgrad von 20 bis 200 als Komponente F, und
- 0,05 bis 5 Gew.-% Wachs ausgewählt aus der Gruppe der Polyolefinwachse, Amidwachse, natürlichen Wachse, langkettigen aliphatischen Carbonsäuren, die Kettenlängen von C₁₄ bis C₄₀ aufweisen und/oder deren Estern oder Salzen als Komponente G, wobei die Prozentangaben sich auf die Gesamtmenge der Polyamidzusammensetzung beziehen.

2. Flammhemmende Polyamidzusammensetzungen nach Anspruch 1, **dadurch gekennzeichnet, dass** M und Met Al bedeuten, m und n 3 sind und dass Komponente D ein Aluminiumsalz ist.

3. Flammhemmende Polyamidzusammensetzungen nach Anspruch 1, **dadurch gekennzeichnet, dass** der Anteil von Komponente A 25 bis 75 Gew.-% beträgt.

4. Flammhemmende Polyamidzusammensetzungen nach Anspruch 1, **dadurch gekennzeichnet, dass** der Anteil von Komponente B 20 bis 40 Gew.-% beträgt.

5. Flammhemmende Polyamidzusammensetzungen nach Anspruch 1, **dadurch gekennzeichnet, dass** der Anteil von Komponente C 5 bis 20 Gew.-% beträgt.

6. Flammhemmende Polyamidzusammensetzungen nach Anspruch 1, **dadurch gekennzeichnet, dass** der Anteil von Komponente D 0,05 bis 1,5 Gew.-% beträgt.

7. Flammhemmende Polyamidzusammensetzungen nach Anspruch 1, **dadurch gekennzeichnet, dass** der Anteil von Komponente E 0,01 bis 0,6 Gew.-% beträgt.

8. Flammhemmende Polyamidzusammensetzungen nach Anspruch 1, **dadurch gekennzeichnet, dass** der Anteil von Komponente F 2 bis 10 Gew.-% beträgt.

9. Flammhemmende Polyamidzusammensetzungen nach Anspruch 1, **dadurch gekennzeichnet, dass** der Anteil von Komponente G 0,1 bis 2 Gew.-% beträgt.

10. Flammhemmende Polyamidzusammensetzungen nach mindestens einem der Ansprüche 1 bis 9, **dadurch gekennzeichnet, dass** die Polyamidzusammensetzungen anorganisches Phosphonat der Formel (III) 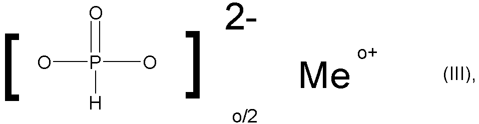
worin Me Fe, TiOᵣ, Zn oder insbesondere Al ist,
o 2 bis 3, vorzugsweise 2 oder 3, bedeutet, und
r = (4 - o) / 2 ist,
als weitere Komponente H enthalten, wobei die Verbindung der Formel (III) in einer Menge von 0,005 bis 10 Gew.-%, insbesondere in einer Menge von 002 bis 5 Gew.-%, bezogen auf die Gesamtmenge der Polyamidzusammensetzung, vorliegt.

11. Flammhemmende Polyamidzusammensetzungen nach mindestens einem der Ansprüche 1 bis 10, **dadurch gekennzeichnet, dass** sie einen Comparative Tracking Index aufweist gemessen nach der International Electrotechnical Commission Standard IEC-60112/3 von größer gleich 500 Volt aufweist.

12. Flammhemmende Polyamidzusammensetzungen nach mindestens einem der Ansprüche 1 bis 11, **dadurch gekennzeichnet, dass** sie eine Bewertung von V0 nach UL-94 von 3.2 mm bis 0,4 mm Dicke erreicht.

13. Flammhemmende Polyamidzusammensetzungen nach mindestens einem der Ansprüche 1 bis 12, **dadurch gekennzeichnet, dass** sie einen Glow Wire Flammability Index nach IEC-60695-2-12 von mindestens 960 °C bei 0,75 - 3 mm Dicke aufweist.

14. Flammhemmende Polyamidzusammensetzungen nach mindestens einem der Ansprüche 1 bis 13, **dadurch gekennzeichnet, dass** es sich bei Komponente A um ein oder mehrere Polyamide ausgewählt ist aus der Gruppe bestehend aus PA 6, PA 6.6, PA 4.6, PA 12, PA 6.10 handelt.

15. Flammhemmende Polyamidzusammensetzungen nach Anspruch 14, **dadurch gekennzeichnet, dass** es sich bei Komponente A um Polyamid 6.6 oder um Polymer-Gemische aus Polyamid 6.6 und Polyamid 6 handelt.

16. Flammhemmende Polyamidzusammensetzungen nach Anspruch 15, **dadurch gekennzeichnet, dass** Komponente A zu mindestens 75 Gew.-% aus Polyamid 6.6 und zu höchstens 25 Gew.-% aus Polyamid 6 besteht.

17. Flammhemmende Polyamidzusammensetzungen nach mindestens einem der Ansprüche 1 bis 16, **dadurch gekennzeichnet, dass** als Komponente B Glasfasern eingesetzt werden.

18. Flammhemmende Polyamidzusammensetzungen nach mindestens einem der Ansprüche 1 bis 17, **dadurch gekennzeichnet, dass** der durchschnittliche Kondensationsgrad des Melaminpolyphosphats 40 bis 150 beträgt.

19. Flammhemmende Polyamidzusammensetzungen nach mindestens einem der Ansprüche 1 bis 18, **dadurch gekennzeichnet, dass** das Melaminpolyphosphat eine Zersetzungstemperatur von größer gleich 320 °C aufweist.

20. Flammhemmende Polyamidzusammensetzungen nach mindestens einem der Ansprüche 1 bis 19, **dadurch gekennzeichnet, dass** Komponente G ein Ester oder ein Salz von langkettigen aliphatischen Carbonsäuren mit einer Kettenlänge von C₁₄ bis C₄₀ ist.

21. Flammhemmende Polyamidzusammensetzungen nach mindestens einem der Ansprüche 1 bis 19, **dadurch gekennzeichnet, dass** Komponente G ein Polyamidwachs ist, das durch Umsetzung von Ammoniak oder Alkylendiamin mit gesättigten und/oder ungesättigten Fettsäuren mit 14 bis 40 Kohlenstoffatomen hergestellt worden ist.

22. Flammhemmende Polyamidzusammensetzungen nach mindestens einem der Ansprüche 1 bis 21, **dadurch gekennzeichnet, dass** diese weitere Additive als Komponente I enthält, wobei die weiteren Additive ausgewählt sind aus der Gruppe bestehend aus Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten C, D, E und F unterscheiden .

23. Verwendung der Polyamidzusammensetzungen nach einem der Ansprüche 1 bis 22 zur Herstellung von Fasern, Folien und Formkörpern, insbesondere für Anwendungen im Elektro- und Elektronikbereich.

## Claims

1. Flame-retardant polyamide composition comprising
- 25% to 95% by weight of thermoplastic polyamide having a melting point of not more than 290°C, determined by means of differential scanning calorimetry (DSC) at a heating rate of 10K/second, as component A,
- 1% to 45% by weight of fillers and/or reinforcers as component B,
- 1% to 35% by weight of phosphinic salt of the formula (I) as component C 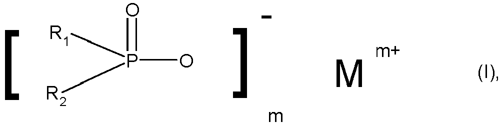
in which R₁ and R₂ are ethyl,
M is Al, Fe, TiOₚ or Zn,
m is 2 to 3, and
p = (4 - m) / 2
- 0.01% to 3% by weight of compound selected from the group of the Al, Fe, TiOₚ and Zn salts of ethylbutylphosphinic acid, of dibutylphosphinic acid, of ethylhexylphosphinic acid, of butylhexylphosphinic acid and/or of dihexylphosphinic acid as component D
- 0.001% to 1% by weight of phosphonic salt of the formula II as component E 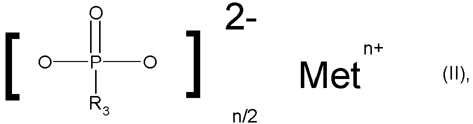
in which R₃ is ethyl,
Met is Al, TiO_{q} or Zn,
n is 2 to 3, and
q = (4 - n) / 2
- 1% to 25% by weight of melamine polyphosphate having an average degree of condensation of 20 to 200 as component F, and
- 0.05% to 5% by weight of wax selected from the group of the polyolefin waxes, amide waxes, natural waxes, long-chain aliphatic carboxylic acids having chain length of C₁₄ to C₄₀ and/or the esters or salts thereof as component G, where the percentages are based on the total amount of the polyamide composition.

2. Flame-retardant polyamide composition according to Claim 1, **characterized in that** M and Met are Al, m and n are 3, and component D is an aluminum salt.

3. Flame-retardant polyamide composition according to Claim 1, **characterized in that** the proportion of component A is 25% to 75% by weight.

4. Flame-retardant polyamide composition according to Claim 1, **characterized in that** the proportion of component B is 20% to 40% by weight.

5. Flame-retardant polyamide composition according to Claim 1, **characterized in that** the proportion of component C is 5% to 20% by weight.

6. Flame-retardant polyamide composition according to Claim 1, **characterized in that** the proportion of component D is 0.05% to 1.5% by weight.

7. Flame-retardant polyamide composition according to Claim 1, **characterized in that** the proportion of component E is 0.01% to 0.6% by weight.

8. Flame-retardant polyamide composition according to Claim 1, **characterized in that** the proportion of component F is 2% to 10% by weight.

9. Flame-retardant polyamide composition according to Claim 1, **characterized in that** the proportion of component G is 0.1% to 2% by weight.

10. Flame-retardant polyamide composition according to at least one of Claims 1 to 9, **characterized in that** the polyamide composition comprises inorganic phosphonate of the formula (III) 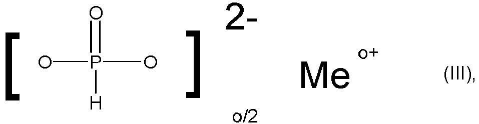
in which Me is Fe, TiOᵣ, Zn or especially Al,
o is 2 to 3, preferably 2 or 3 and
r = (4 - o) / 2,
as further component H, where the compound of the formula (III) is present in an amount of 0.005% to 10% by weight, especially in an amount of 002% to 5% by weight, based on the total amount of the polyamide composition.

11. Flame-retardant polyamide composition according to at least one of Claims 1 to 10, **characterized in that** it has a comparative tracking index measured by International Electrotechnical Commission Standard IEC-60112/3 of not less than 500 volts.

12. Flame-retardant polyamide composition according to at least one of Claims 1 to 11, **characterized in that** it attains a V-0 assessment according to UL94 from thickness 3.2 mm to 0.4 mm.

13. Flame-retardant polyamide composition according to at least one of Claims 1 to 12, **characterized in that** it has a glow wire flammability index according to IEC-60695-2-12 of not less than 960°C at thickness 0.75-3 mm.

14. Flame-retardant polyamide composition according to at least one of Claims 1 to 13, **characterized in that** component A is one or more polyamides selected from the group consisting of PA 6, PA 6,6, PA 4,6, PA 12, PA 6,10.

15. Flame-retardant polyamide composition according to Claim 14, **characterized in that** component A is nylon-6,6 or comprises polymer mixtures of nylon-6,6 and nylon-6.

16. Flame-retardant polyamide composition according to Claim 15, **characterized in that** component A consists to an extent of at least 75% by weight of nylon-6,6 and to an extent of at most 25% by weight of nylon-6.

17. Flame-retardant polyamide composition according to at least one of Claims 1 to 16, **characterized in that** glass fibers are used as component B.

18. Flame-retardant polyamide composition according to at least one of Claims 1 to 17, **characterized in that** the average degree of condensation of the melamine polyphosphate is 40 to 150.

19. Flame-retardant polyamide composition according to at least one of Claims 1 to 18, **characterized in that** the melamine polyphosphate has a breakdown temperature of not less than 320°C.

20. Flame-retardant polyamide composition according to at least one of Claims 1 to 19, **characterized in that** component G is an ester or a salt of long-chain aliphatic carboxylic acids having a chain length of C₁₄ to C₄₀.

21. Flame-retardant polyamide composition according to at least one of Claims 1 to 19, **characterized in that** component G is a polyamide wax which has been prepared by reacting ammonia or alkylenediamine with saturated and/or unsaturated fatty acids having 14 to 40 carbon atoms.

22. Flame-retardant polyamide composition according to at least one of Claims 1 to 21, **characterized in that** it comprises further additives as component I, where the further additives are selected from the group consisting of antioxidants, UV stabilizers, gamma ray stabilizers, hydrolysis stabilizers, costabilizers for antioxidants, antistats, emulsifiers, nucleating agents, plasticizers, processing auxiliaries, impact modifiers, dyes, pigments and/or further flame retardants other than components C, D, E and F.

23. Use of the polyamide compositions according to any of Claims 1 to 22 for production of fibers, films and shaped bodies, especially for applications in the electricals and electronics sector.

## Revendications

1. Compositions de polyamides ignifuges contenant
- 25 à 95 % en poids d'un polyamide thermoplastique ayant un point de fusion inférieur ou égal à 290 °C, déterminé par analyse calorimétrique différentiel (ACD) pour une vitesse de montée en température de 10 K/seconde, comme composant A,
- 1 à 45 % en poids de charges et/ou de substances de renforcement, comme composant B,
- 1 à 35 % en poids d'un sel de l'acide phosphinique de formule (I) comme composant C 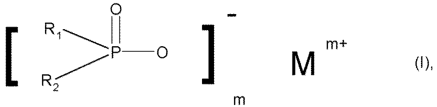
dans laquelle R₁ et R₂ représentent un éthyle,
M représente Al, Fe, TiOₚ ou Zn,
m représente 2 à 3, et
p = (4 - m)/2
- 0, 01 à 3 % en poids d'un composé choisi parmi les sels d'Al, de Fe, TiOₚ ou de Zn de l'acide éthylbutylphosphinique, de l'acide dibutylphosphinique, de l'acide éthylhexylphosphinique, de l'acide butylhexylphosphinique et/ou de l'acide dihexylphosphinique, comme composant D
- 0,001 à 1 % en poids d'un sel de l'acide phosphonique de formule II, comme composant E 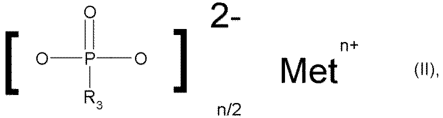
dans laquelle R₃ représente un éthyle,
Met représente Al, TiO_{q} ou Zn,
n représente 2 à 3, et
q = (4 - n)/2,
- 1 à 25 % en poids de polyphosphate de mélamine ayant un degré moyen de condensation de 20 à 200, comme composant F, et
- 0,05 à 5 % en poids d'une cire choisie dans le groupe des cires de polyoléfine, des cires d'amide, des cires naturelles, des acides carboxyliques aliphatiques à longue chaîne, qui ont des longueurs de chaîne de C₁₄ à C₄₀, et/ou de leurs esters ou sels, comme composant G, les indications de pourcentage se rapportant à la quantité totale de la composition de polyamide.

2. Compositions de polyamides ignifuges selon la revendication 1, **caractérisées en ce que** M et Met représentent Al, m et n représentent 3, et **en ce que** le composant D est un sel d'aluminium.

3. Compositions de polyamides ignifuges selon la revendication 1, **caractérisées en ce que** la proportion du composant A est de 25 à 75 % en poids.

4. Compositions de polyamides ignifuges selon la revendication 1, **caractérisées en ce que** la proportion du composant B est de 20 à 40 % en poids.

5. Compositions de polyamides ignifuges selon la revendication 1, **caractérisées en ce que** la proportion du composant C est de 5 à 20 % en poids.

6. Compositions de polyamides ignifuges selon la revendication 1, **caractérisées en ce que** la proportion du composant D est de 0,05 à 1,5 % en poids.

7. Compositions de polyamides ignifuges selon la revendication 1, **caractérisées en ce que** la proportion du composant E est de 0,01 à 0,6 % en poids.

8. Compositions de polyamides ignifuges selon la revendication 1, **caractérisées en ce que** la proportion du composant F est de 2 à 10 % en poids.

9. Compositions de polyamides ignifuges selon la revendication 1, **caractérisées en ce que** la proportion du composant G est de 0,1 à 2 % en poids.

10. Compositions de polyamides ignifuges selon au moins l'une des revendications 1 à 9, **caractérisées en ce que** les compositions de polyamides contiennent un phosphonate inorganique de formule (III) 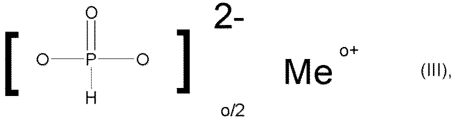
dans laquelle Me représente Fe, TiOᵣ, Zn ou en particulier Al,
o représente 2 à 3, de préférence 2 ou 3, et
r = (4 - o)/2,
comme composant H supplémentaire, le composé de formule (III) étant présent en une quantité de 0,005 à 10 % en poids, en particulier en une quantité de 002 à 5 % en poids, par rapport à la quantité totale de la composition de polyamide.

11. Compositions de polyamides ignifuges selon au moins l'une des revendications 1 à 10, **caractérisées en ce qu'**elles présentent un indice de tenue au cheminement, mesuré selon la norme de la Commission électrotechnique internationale CEI-60112/3, supérieur ou égal à 500 Volts.

12. Compositions de polyamides ignifuges selon au moins l'une des revendications 1 à 11, **caractérisées en ce qu'**elles atteignent un classement de V0 selon UL-94 pour une épaisseur de 3,2 mm à 0,4 mm.

13. Compositions de polyamides ignifuges selon au moins l'une des revendications 1 à 12, **caractérisées en ce qu'**elles présentent un indice d'inflammabilité au fil incandescent selon CEI-60695-2-12 d'au moins 960 °C pour une épaisseur de 0,75-3 mm.

14. Compositions de polyamides ignifuges selon au moins l'une des revendications 1 à 13, **caractérisées en ce que**, pour ce qui concerne le composant A, il s'agit d'un ou plusieurs polyamides choisis dans le groupe consistant en PA 6, PA 6.6, PA 4.6, PA 12, PA 6.10.

15. Compositions de polyamides ignifuges selon la revendication 14, **caractérisées en ce que**, pour ce qui concerne le composant A, il s'agit de polyamide 6.6 ou de mélanges polymères de polyamide 6.6 et de polyamide 6.

16. Compositions de polyamides ignifuges selon la revendication 15, **caractérisées en ce que** le composant A est constitué à raison d'au moins 75 % en poids de polyamide 6.6 et pour au plus 25 % en poids de polyamide 6.

17. Compositions de polyamides ignifuges selon au moins l'une des revendications 1 à 16, **caractérisées en ce qu'**on utilise comme composant B des fibres de verre.

18. Compositions de polyamides ignifuges selon au moins l'une des revendications 1 à 17, **caractérisées en ce que** le degré moyen de condensation du polyphosphate de mélamine est de 40 à 150.

19. Compositions de polyamides ignifuges selon au moins l'une des revendications 1 à 18, **caractérisées en ce que** le polyphosphate de mélamine présente une température de décomposition supérieure ou égale à 320 °C.

20. Compositions de polyamides ignifuges selon au moins l'une des revendications 1 à 19, **caractérisées en ce que** le composant G est un ester ou un sel d'acides carboxyliques aliphatiques à longue chaîne ayant une longueur de chaîne de C₁₄ à C₄₀.

21. Compositions de polyamides ignifuges selon au moins l'une des revendications 1 à 19, **caractérisées en ce que** le composant G est une cire de polyamide, qui a été fabriquée par réaction d'ammoniac ou d'une alkylènediamine avec des acides gras saturés et/ou insaturés ayant 14 à 40 atomes de carbone.

22. Compositions de polyamides ignifuges selon au moins l'une des revendications 1 à 21, **caractérisées en ce qu'**elles contiennent comme composant I des additifs supplémentaires, les additifs supplémentaires étant choisis dans le groupe consistant en les antioxydants, les stabilisants UV, les stabilisants vis-à-vis des rayons gamma, les stabilisants d'hydrolyse, les costabilisants pour antioxydants, les antistatiques, les émulsifiants, les agents de nucléation, les plastifiants, les auxiliaires de mise en œuvre, les modifiants choc, les colorants, les pigments et/ou d'autres retardateurs de flamme, qui sont différents des composants C, D, E et F.

23. Utilisation des compositions de polyamides selon l'une des revendications 1 à 22 pour la fabrication de fibres, de feuilles et d'objets moulés, en particulier pour des utilisations dans le domaine électrique et électronique.
